# EUROPEAN PATENT APPLICATION

(11) **EP 3 623 229 A1**
(43) Date of publication of application: **18.03.2020**
(21) Application number: 18193982.8
(22) Date of filing: 12.09.2018
(51) Int. Cl.: B60R 21/015, B60N 2/00

(54) **VEHICLE PASSENGER DETECTION SYSTEM**

(71) Applicant: Tribus Beheer B.V., 3543 AC Utrecht (NL)
(72) Inventor: VAN VLIET, Eric, 3086 TN Rotterdam (NL); BELL, John, Carlisle, Cumbria CA2 6QU (GB)
(74) Representative: Van Breda, Jacobus

(57) **Abstract**

It is described a passenger transport system (1) comprising:
- at least one electromechanical self powering RF signal generator (4) having a push & return mechanism (4-1), and
- at least one passenger seat (2) having a seat region (2-1), wherein said push & return mechanism (4-1) is installed,
said generator (4), which is provided with an RF transmitter (6), is equipped to self generate electric power based on a mechanical force applied on the push & return mechanism (4-1) by a passenger sitting in the seat region (2-1), and
whereby said generated electric power is used for the RF transmitter (6) to transmit an RF signal on an adjustable frequency in case the passenger sitting in the seat region (2-1) thereby presses a switch (4-2) of the push & return mechanism (4-1), and
which passenger transport system (1) further comprises:
- a central RF receiver (7) for receiving transmitted RF signals which have features to identify the individual passenger seats (2) the RF signals are transmitted from, and
- means (8) for based on the received RF signals deriving information indicating which of the passenger seats (2) are and/or are not occupied.

## Description

The present invention relates to a passenger transport system.

The present invention also relates to a vehicle provided with such a passenger transport system.

A passenger transport system with a pressure sensor for a car seat with wireless communication is known from US 2018/0056814 A1. Depending on the weight sensed by the pressure sensor installed in a car seat the system is configured to switch a wireless signal on and off for communication to a portable electronic device. This is applied as a safety feature and a reminder message is being sent to the portable device held by the parent or guardian of a child to address the issue that the child is accidently left in the car seat.

It is an object of the present invention to provide a more general applicable passenger transport system, suited to provide passenger presence and possible passenger safety information to the personal, such as drivers of the vehicle, and also to increase a save and more efficient vehicle transport.

Thereto the passenger transport system according to the invention has the features that it comprises:
- at least one electromechanical self powering RF signal generator having a push & return mechanism, and
- at least one passenger seat having a seat region, wherein said push & return mechanism is installed,
said generator, which is provided with an RF transmitter, is equipped to self generate electric power based on a mechanical force applied on the push & return mechanism by a passenger sitting in the seat region, and
whereby said generated electric power is used for the RF transmitter to transmit an RF signal on an adjustable frequency in case the passenger sitting in the seat region thereby presses a switch of the push & return mechanism, and
which passenger transport system further comprises:
- a central RF receiver for receiving transmitted RF signals which have features to identify the individual passenger seats the RF signals are transmitted from, and
- means for based on the received RF signals deriving information indicating which of the passenger seats are and/or are not occupied.

It is an advantage of the passenger transport system according to the present invention that the seat occupancy can be monitored, which can then be communicated by a driver of the vehicle in the usual way to incoming passengers, which are then certain at entering the vehicle that there are free seats available in the vehicle. This is particularly advantageous for those means of transport wherein only passengers occupying a seat may be transported.

In addition the part of the passenger transport system installed in each of the passenger seats in a vehicle does not require any wiring to the central receiver part of the passenger transport system, which is normally close to the driver or conductor of the vehicle. This reduces wiring in the vehicles seats and from each of the seats to the central receiver part, and reduces manufacturing costs of the passenger transport system according to the invention, while its failsafe operation is warranted.

Furthermore the parts of the system in each of the seats and the communication to the RF receiver part does not require any local power, such as battery power, because use is made of the pressure applied by every passenger in their seats to generate locally required electric power by the electromechanical self powering RF signal generator, known per se. The Enocean® energy harvesting and ultra low power radio technology is an example thereof, which is also available in a version operating in Bluetooth® standard.

An embodiment of the passenger transport system according to the invention has the characterising features that the at least one passenger seat has a safety belt and an associated safety belt switch whose switch position provides information about whether the passenger on the seat is buckled in or not.

Were possible that information about the switch position reflecting the passenger in the seat being buckled in or not may be combined with the occupancy information above in order to prevent that a confirmed seated passenger is not buckled in. Information about the fact that not all passengers are correctly buckled in can then for example be announced over the general vehicle audio system, shown on the dashboard or communicated to for example the next stop or to an central operator.

A further embodiment of the passenger transport system according to the invention has the characterising features that the passenger seats are individually identifiable, such as by uniquely numbering them.

If this information is available to for example a bus driver any individual passenger on the identifiable seat concerned can be informed over the bus audio system or if possible over the individual audio system such as available on hop-on hop-off busses that the seat belt of a particularly announced seat number is not buckled in correctly.

In another embodiment of the passenger transport system according to the invention the passenger transport system comprises means for combining the information indicating which of the passenger seats are and/or are not occupied with the information, either or not communicated wirelessly to the means for combining, about whether the passenger on the seat is buckled in or not.

Technically seen either one or both separately, or only the combination of both aforementioned sorts of information can be communicated to the driver. The former cases are more elaborate, but more advanced and failsafe, because both sorts of information are available separately, which refers to Boolean OR processing both information. In the latter case if only the combination of information is available the one RF signal per seat represents proof that a person present on the seat is buckled in properly, which means less technique and Boolean AND processing of both information are required for its technical realisation.

At present the passenger transport system according to the invention will be elucidated further together with its additional advantages while reference is being made to the appended drawing, wherein similar components are being referred to by means of the same reference numerals. In the drawing:
Figure 1 shows a schematic view of an array of seats wirelessly connected to a central RF receiver close to a driver of the vehicle, and

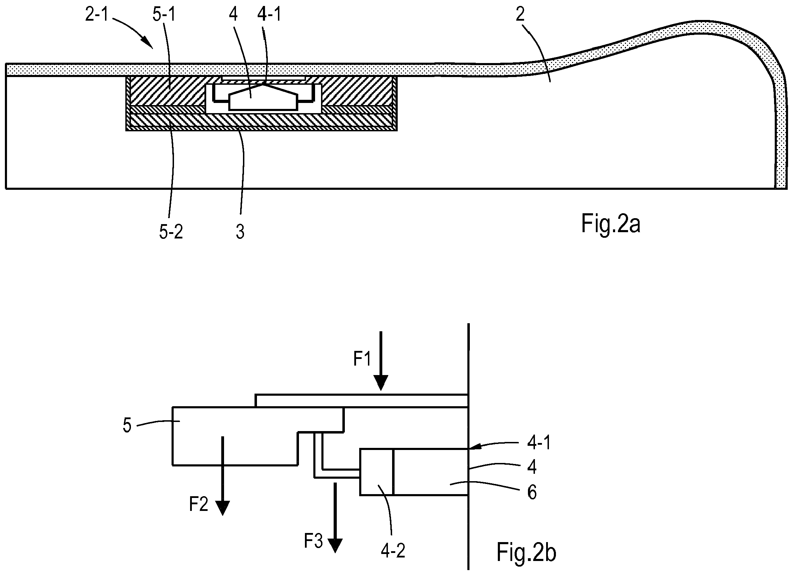

Figure 2a shows a cross section of a seat region of a seat for a vehicle, whereas fig. 2b shows a detail of a the switching of an electromechanical self powering RF signal generator provided therein.

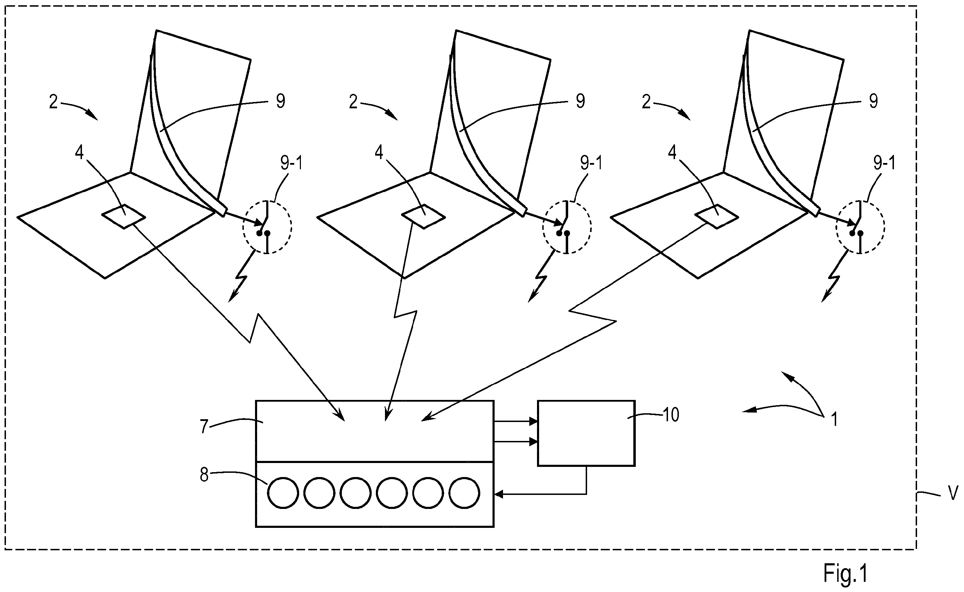

Figure 1 schematically shows a passenger transport system 1 meant to be installed in for example a vehicle V, such as a train, tram, bus, underground, subway, airplane, double deck bus, double deck train, biplane or the like. The several passengers seats 2 placed therein each have a seat region 2-1 with therein a cavity 3 for accommodating an electromechanical self powering RF signal generator 4. Such a generator 4 has a push & return mechanism 4-1 whereon the weight F₁ of a passenger sitting in the seat 2 is used to derive electric power there from. In the mechanism 4-1 a foam may be used in the seat region 2 as a means of retaining comfort for the sitting passenger which foam also provides a means to return the mechanism 4-1 to its unoccupied position. In particular the foam is positioned between an upper plate 5-1 and a bottom plate 5-2. The mentioned Enocean® energy harvesting and ultra low power radio technology goes well together with such an embodiment of the mechanism 4-1. The weight F₁ is also used to apply a force F₂ on the upper plate 5-1 in the cavity 3 which in turn applies a switching force F₃ on a switch 4-2 of the generator 4. The generator 4 is provided with an RF transmitter 6 which based on its own generated electric power transmits an RF signal if the force F₃ is applied on the switch 4-2. With an RF transmitter 6 any wireless transmitter is meant which is capable of wirelessly sending a high frequency signal, at any speed but preferably with a low transmission speed, and according to any protocol or standard, such as Bluetooth®. The RF signal may hold a data payload with an individual label of the seat 2 concerned, such as its uniquely number. In order not to disturb RF signals transmitted by other generators 4 in the same or a neighbouring vehicle the adjustable transmitter frequencies differ. Or at least some other technical measure is taken, such as some form of multiplexing, to safeguard an undisturbed receipt of the various RF signals.

The passenger transport system 1 further comprises a central RF receiver 7 for receiving transmitted RF signals which have features to identify the individual passenger seats 2 the RF signals are transmitted from, and means 8 for based on the received RF signals deriving information indicating which of the passenger seats are and/or are not occupied. The means 8 may include graphic means to indicate this relevant information to the driver.

Nowadays vehicles have on their passenger seats a safety belt 9 and an associated safety belt, either or not electromechanical, switch 9-1 whose switch position provides information about whether the passenger on the seat 2 is buckled in or not. It may be that in existing vehicles the seat belt information is already available to the driver, but if not, the existing vehicle can, without requiring wiring the whole vehicle, easily be supplemented with the passenger transport system 1 if the seats 2 are being replaced.

It is advantageous to combine the seat belt information with the above elucidated occupancy information with the help of combination means 10 and to provide that separate and/or combined to the driver or conductor to confirm that everyone that is seated is buckled in and respectively that there are still free seats available somewhere in the vehicle. This requires Boolean OR processing because both two sorts of information may qualify independent from the other to transmit its corresponding RF signal to the driver.

And if the seat number information is made available by the system 1 the driver knows about the free seat and knows where the free seat is situated in the vehicle so that he/she can communicate that to the passenger entering the vehicle. And/or some graphics system, such as with small LEDs above the seats, indicates where the free seats are located in the vehicle V.

In a passenger transport system 1 where the electronics of the occupancy information and the seat belt information would be combined an RF signal is only sent by the seat generators transmitter if and the seat is occupied and the person seated is buckled in. This requires AND processing both two sorts of information, before the RF signal is transmitted.

At wish the aforementioned information can be stored in a local memory, and/or stored in an application or WEB-site for later analysis and verification purposes.

## Claims

1. Passenger transport system (1) comprising:
- at least one electromechanical self powering RF signal generator (4) having a push & return mechanism (4-1), and
- at least one passenger seat (2) having a seat region (2-1), wherein said push & return mechanism (4-1) is installed,
said generator (4), which is provided with an RF transmitter (6), is equipped to self generate electric power based on a mechanical force applied on the push & return mechanism (4-1) by a passenger sitting in the seat region (2-1), and
whereby said generated electric power is used for the RF transmitter (6) to transmit an RF signal on an adjustable frequency in case the passenger sitting in the seat region (2-1) thereby presses a switch (4-2) of the push & return mechanism (4-1), and
which passenger transport system (1) further comprises:
- a central RF receiver (7) for receiving transmitted RF signals which have features to identify the individual passenger seats (2) the RF signals are transmitted from, and
- means (8) for based on the received RF signals deriving information indicating which of the passenger seats (2) are and/or are not occupied.

2. Passenger transport system (1) according to claim 1, **characterised in that** the at least one passenger seat (2) has a safety belt (9) and an associated safety belt switch (9-1) whose switch position provides information about whether the passenger on the seat (2) is buckled in or not.

3. Passenger transport system (1) according to claim 1 or 2, **characterised in that** the passenger seats (2) are individually identifiable, such as by uniquely numbering them.

4. Passenger transport system (1) according to any of the claims 1-3, **characterised in that** the passenger transport system (1) comprises means (10) for combining the information indicating which of the passenger seats (2) are and/or are not occupied with the information, either or not communicated wirelessly to the means (10) for combining about whether the passenger on the seat (2) is buckled in or not.

5. Passenger transport system (1) according claims 3 and 4, **characterised in that** said means (10) for combining are equipped to pinpoint those passenger seat(s) (2) whereon the passengers occupying those seats are and/or are not buckled in properly.

6. Passenger transport system (1) according to claim 4 or 5, **characterised in that** said means (10) for combining have AND and/or OR devices for Boolean processing the information indicating which of the passenger seats (2) are and/or are not occupied, and the information about whether the passenger on the seat (2) is buckled in or not.

7. Vehicle (V) provided with a passenger transport system (1) according to one of the claims 1-6.

8. Vehicle (V) according to claim 7 which is a train, a bus, a tram, an airplane, a double deck bus, a double deck train, or a biplane.
